# EUROPEAN PATENT APPLICATION

(11) **EP 1 257 121 A2**
(43) Date of publication of application: **13.11.2002**
(21) Application number: 02253179.2
(22) Date of filing: 07.05.2002
(51) Int. Cl.: H04N 5/45

(54) **Display control apparatus**

(30) Priority: 08.05.2001 JP 2001137638
(71) Applicant: CANON KABUSHIKI KAISHA, Tokyo (JP)
(72) Inventor: Tsunoda, Takashi, c/o Canon Kabushiki Kaisha, Tokyo (JP); Yui, Hideaki, c/o Canon Kabushiki Kaisha, Tokyo (JP)
(74) Representative: Beresford, Keith Denis Lewis

(57) **Abstract**

A display control apparatus displays a main picture and at least one sub-picture on a display, and controls the display to change display positions of the sub-picture and the main picture by selecting at least one sub-picture, and further performs a transition display of the changing operation.

## Description

### BACKGROUND OF THE INVENTION

### Field of the Invention

The present invention relates to a multi-picture display apparatus, a multi-picture display method, a recording medium and a program, all being capable of displaying a plurality of programs using a main picture and at least one child picture, and more particularly to a multi-picture display apparatus, a multi-picture display method, a recording medium and a program, all being for displaying video sources by changing them between a main picture and a child picture.

### Related Background Art

Conventionally, a television capable of displaying program video supplied through analog broadcasting on a child picture as well as on a main picture is known. Japanese Patent Application Laid-Open No. 2-96486, for example, disclose an example of a television having such a multi-picture display function. There is also a television having the function of displaying a video source by changing the video source between a child picture and a main picture as a television having a multi-picture display function. When a video source is displayed by being changed from a child picture to a main picture, the display change is conventionally executed instantaneously to overwrite the video source of the child picture at the position where the main picture is displayed.

However, each picture is instantaneously changed at the time of the display change of video sources on the television of the related art described above, having the multi-picture display function. Then, for example, even if a video source that has been displayed as a certain child picture is changed to be displayed as the main picture, it is not easy for a user to know from which child picture among the plural child pictures the video source has been changed to be displayed as the main picture.

Moreover, when a user operates the display change with a remote controller or the like, it is difficult for the user to judge whether the display change is executed as the user desires or not without looking and listening the video after the change. Consequently, the problem of lacking comfortableness remarkably or the like is also produced.

### SUMMARY OF THE INVENTION

Against such a background, the present invention aims to solve the aforesaid problems and to provide a multi-picture display apparatus, a multi-picture display method, a recording medium and a program, all making it possible to enable a transition display which ensures the sufficient visibility of changing the pictures in accordance with a user's picture change operation, thereby easily discriminating certainty of the operation and execution of a change of pictures.

Moreover, the present invention aims to provide a multi-picture display apparatus, a multi-picture display method, a recording medium and a program, all being capable of providing a transition time bringing about a fixed transition effect at the time of changing pictures, thereby easily visualizing which picture has been changed when picture display positions are changed particularly in multi-picture display.

Moreover, the present invention aims to provide a multi-picture display apparatus, a multi-picture display method, a recording medium and a program, all enabling not only to overwrite the video of a child picture which has been moved from the child picture in the main picture simply when a picture change from the child picture to the main picture is performed, but also to perform the transition display of the video of the main picture at a display position in a picture coming within the video category of the video source, thereby judging the assortment of a video source that is viewed and listened in a main picture.

Moreover, the present invention aims to provide a multi-picture display apparatus, a multi-picture display method, a recording medium and a program, all at the time of multi-picture display displaying a video image at the highest priority at a display position in the video category thereof, thereby realizing a picture change which is intuitive for a user and improving visuality of multi-pictures.

According to an aspect of the present invention, there is provided a display control apparatus for controlling display means capable of displaying video images respectively in a plurality of windows on a same screen, comprising: instruction means for instructing any one of the plural windows while the video images being displayed in the plural windows respectively; and display control means for controlling the display means to display a first video image displayed in a first window instructed by the instruction means, in a second window by changing the first video image with a second video image displayed in the second window, wherein the display control means controls the display means to display a process of a gradual transition of the first video image from the first window to the second window.

Advantages and features of the present invention other than the aforesaid will be more apparent from the following detailed description of the aspects of the invention on the basis of the reference to the attached drawings.

### BRIEF DESCRIPTION OF THE DRAWINGS

Fig. 1 is comprised of Figs. 1A and 1B showing a block diagram of the schematic configuration of an embodiment of a multi-picture display apparatus of the present invention;
Fig. 2 is a diagram for illustrating an example of a superimposition synthesis method by the multi-picture display apparatus of the present invention;
Fig. 3 is a flowchart showing the flow of the initialization operation of the multi-picture display apparatus of the first embodiment of the present invention;
Fig. 4 is a view showing an example of a multi-picture layout of the first embodiment of the present invention;
Fig. 5 is comprised of Figs. 5A and 5B showing flowcharts of a transition processing operation of the first embodiment of the present invention;
Figs. 6A, 6B, 6C, 6D and 6E are first image diagrams showing a flow of the transition processing operation of the first embodiment of the present invention;
Figs. 7A, 7B, 7C, 7D and 7E are second image diagrams showing a flow of the transition processing operation of the first embodiment of the present invention;
Fig. 8 is a flowchart showing the flow of the transition processing operation of the first embodiment of the present invention in detail;
Fig. 9 is comprised of Figs. 9A and 9B showing flowcharts of a transition processing operation of a second embodiment of the present invention; and
Figs. 10A, 10B, 10C, 10D and 10E are image diagrams showing a flow of the transition processing operation of a third embodiment of the present invention.

### DESCRIPTION OF THE PREFERRED EMBODIMENTS

In the following, the preferred embodiments of the present invention are minutely described on the basis of the attached drawings.

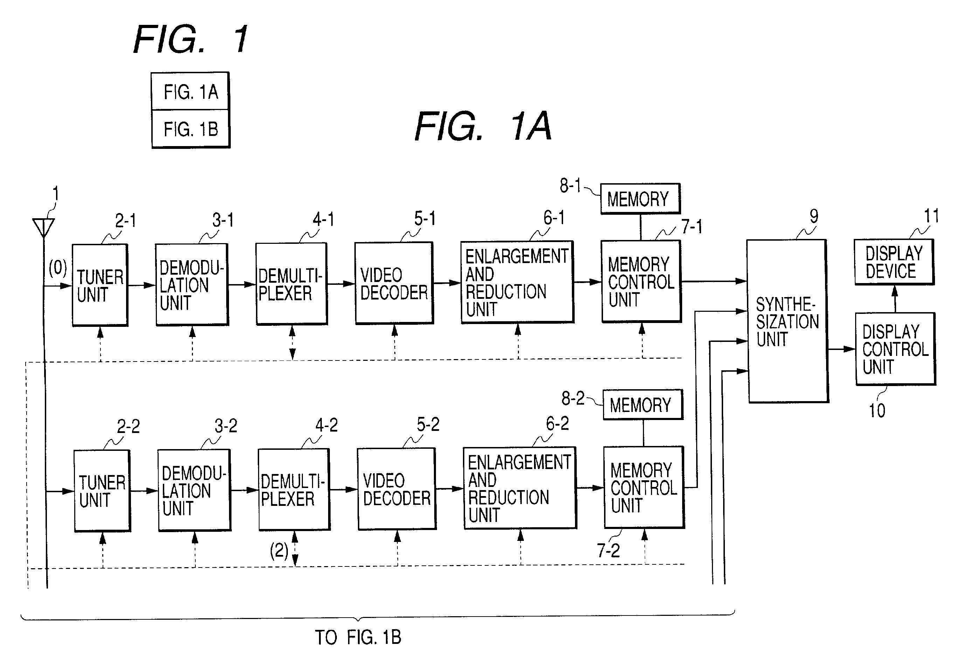

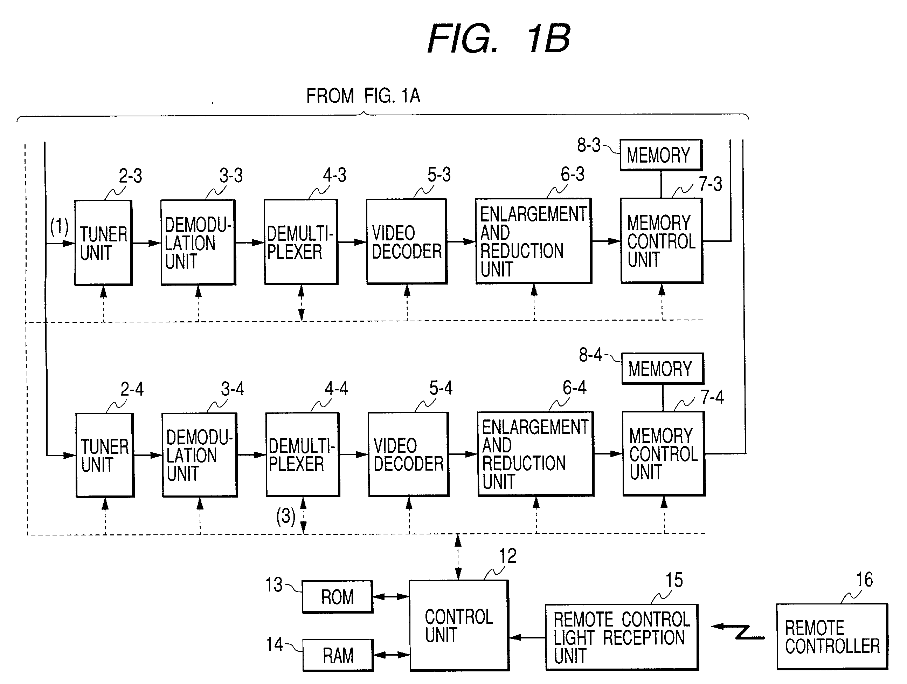

Figs. 1A and 1B are block diagrams showing the schematic configuration of a multi-picture display apparatus of an embodiment of the present invention. The multi-picture display apparatus shown in Figs. 1A and 1B is configured to make it possible to display four independent program video sources after synthesizing them in conformity with a predetermined layout. Incidentally, the program video sources to be displayed after being synthesized may be more than four or less than four.

Next, the configuration of the multi-picture display apparatus of the present embodiment is described in detail with reference to Figs. 1A and 1B. A reference numeral 1 denotes an antenna (or a parabola antenna), and the antenna 1 receives BS digital broadcasting and CS digital broadcasting. Moreover, although the present embodiment aims to receive satellite broadcasting, broadcasting programs may be received through ground waves, optical cables or the like.

Reference numerals 2-1 to 2-4 denote tuner units. In the tuner units 2-1 to 2-4, the waves received by the antenna 1 pass through band-pass filters, down-converters and the like, all being built in the tuner units 2-1 to 2-4, and the passed waves are output to demodulation units 3-1 to 3-4. The demodulation units 3-1 to 3-4 perform the demodulation processing of the received waves, which processing matches the modulation method on the transmission side of the received waves, and perform error correction processing to a desired transport stream (hereinafter simply referred to as TS) and the like. Then, the demodulation units 3-1 to 3-4 deliver the TS subjected to the error correction processing to demultiplexers 4-1 to 4-4. In the TS, a plurality of program packets, which are coded in conformity with, for example, MPEG-2, are multiplexed.

The demultiplexers 4-1 to 4-4 separate the video data, the audio data and the additional information of a desired program from the desired TS. The separated audio data are decoded by audio decoders (not shown) to be output as audio signals. If an amplifier and a speaker are connected with the audio decoders, the audio of the received program can be listened. Incidentally, the sound corresponding to the video image displayed in the main picture is output in the present embodiment.

Moreover, the separated video data are decoded by video decoders 5-1 to 5-4, and are converted into the display format of the raster scan format. After that, the converted video data are delivered as program video sources to enlargement and reduction units 6-1 to 6-4 in a subsequent stage.

Furthermore, the separated additional information is delivered to a control unit 12. If the additional information is data broadcasting which is scheduled to be put into practice in the BS digital broadcasting, the control unit 12 obtains a structured content scenario of a multimedia information service provider by interpreting a broadcast markup language (BML). Moreover, if the additional information is electrical program guide (EPG) information, the control unit 12 obtains program information (e.g. a program, a broadcasting time, a title, a category, and the like) by interpreting PSI/SI information.

The reference numerals 6-1 to 6-4 designate the enlargement and reduction units. The enlargement and reduction units 6-1 to 6-4 execute the preprocessing of video data by means of matrix circuits for converting YUV color difference signals to RGB signals, I-P conversion circuits for converting the scanning method from the interlace method to the progressive method, and the like. After that, the control unit 12 sets resolution conversion parameters (composed of enlargement ratios, reduction ratios, filter factors for weighting enlargement and reduction, and the like) based on the display format (composed of the number of display lines, the number of dots, and the number of colors) and picture layout information set in advance. Thereby, the enlargement and reduction units 6-1 to 6-4 perform the enlargement processing, the reduction processing and the equal magnification processing of the video data that have undergone the preprocessing.

Reference numerals 7-1 to 7-4 denote memory control units. The memory control units 7-1 to 7-4 perform the control of writing the video data received at an input rate (or transfer rates synchronized with the horizontal synchronizing signal and the vertical synchronizing signal on the input side) from the enlargement and reduction units 6-1 to 6-4 into memories 8-1 to 8-4. On the other hand, the memory control units 7-1 to 7-4 perform the control of reading video data from the memories 8-1 to 8-4 at a rate of output (or display rates synchronized with the horizontal synchronizing signal and the vertical synchronizing signal on the output side) from a synthesization unit 9 to a display device 11 in Fig. 1A. The aforesaid write control and the read control are executed completely asynchronously with each other.

Incidentally, the aforesaid operations of the memory control units 7-1 to 7-4 are executed on the basis of memory control parameters (capture areas of input data, read areas output data and the like in the memories 8-1 to 8-4) set by the control unit 12.

The memories 8-1 to 8-4 are configured to have a memory size of at least for one surface of the display device 11 severally. The synthesization unit 9 is an operation unit for synthesizing two or more sets of video data read from the memory control units 7-1 to 7-4 operating independently from each other. In the present embodiment, all of the vide data are output from the synthesization unit 9 at common timing synchronized with the horizontal synchronizing signal and the vertical synchronizing signal of the display device 11, and a data area transferred in one frame is the same as an actual image display area.

The method described above is a measure of aiming to make it easy to arrange each video image at the time of synthesizing video data from four video sources. Moreover, the data effective area of the video data to be input into the synthesization unit 9 on a each video source basis can be discriminated by the use of data effective signals to be received from the memory control units 7-1 to 7-4 during a horizontal period together with the video data.

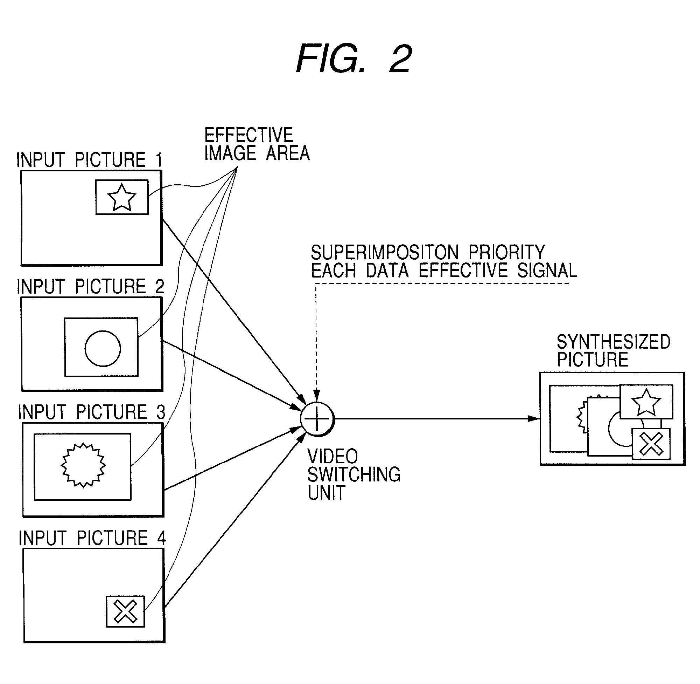

Fig. 2 is a diagram showing imaginarily a video image synthesized by the synthesizing unit 9. Next, Fig. 2 is referred while the synthesization processing of the pieces of video by the synthesization unit 9 is described in detail. If the video data received from the memory control units 7-1 to 7-4 have data effective areas shown in input pictures 1-4 in Fig. 2, the synthesization unit 9 monitors data effective signals to be received from the memory control units 7-1 to 7-4 together with the video data, and selects only the video data to which the data effective signals are active, to output them.

In particular, if two or more data effective signals become active at the same time, the synthesization unit 9 executes the synthesization processing of the video data. In this case, in the synthesization unit 9 is set a display priority for superimposition, which priority has been judged by the control unit 12 on the basis of picture layout information. The synthesization unit 9 synthesizes the video data on the basis of the display priority. By the aforesaid procedures, a synthesized picture of the video data can be obtained.

On the other hand, the control unit 12 controls a GUI generation unit (not shown) to draw OSD data as graphical user interface (GUI) data. The GUI data are output from the GUI generation unit to the synthesization unit 9. The synthesizing unit 9 further synthesizes the GUI data (or GUI background data) as a background picture on the synthesized video data, and thereby the synthesized picture shown in Fig. 2 can be produced. Incidentally, although the GUI background data are synthesized with the synthesized video data in the present embodiment, it is possible to synthesize EPG picture data or other operation support picture data in place of the GUI background data.

A reference numeral 10 denotes a display control unit. The display control unit 10 performs the control of display driving and the conversion of the display format, corresponding to the characteristics of the display device 11. Moreover, an output timing generation unit is built in the display control unit 10. The main role of the output timing generation unit is to generate the timing control signals of the display device 11, and the output timing generation unit generates horizontal synchronizing signals and vertical synchronizing signals to be output to the display device 11 on the basis of a reference clock. Moreover, the output timing generation unit delivers the generated horizontal synchronizing signals and the vertical synchronizing signals to the synthesization unit 9, too.

The reference numeral 11 denotes the display device. A device as a display device applicable to the present embodiment may be any device which is capable of displaying images, such as a flat panel (of liquid crystal, plasma or the like) having a matrix electrode structure, a CRT or the like. But, if it is particularly considered that the device is applied to the application of the present embodiment, a high-definition large picture display capable of displaying a high-definition video image being 720 P or more is suitable.

The reference numeral 12 denotes the control unit for controlling the whole present system. The control unit 12 is equipped with a RAM 14 for storing data operated by a CPU temporarily, a ROM 13 for storing control programs, a counter (not shown) for measuring time, a peripheral input-output interface (not shown), and the like.

Moreover, as the control unit 12 applicable to the present embodiment, a control unit may be a unit composed of only logical logic, a CPU, or a media processor capable of executing parallel operations. Furthermore, the control programs may be stored in the ROM 13, or may be transmitted from the outside through the peripheral input-output interface.

Moreover, a remote control light reception unit 15 is connected with the control unit 12, and the remote control light reception unit 15 can accept commands from a remote controller 16 by the use of infrared light. User's operation requirements can be accepted by means of the remote controller 16.

In the following, the operations of the multi-picture display apparatus of the present embodiment are described in detail with reference to the reference numerals described above. Incidentally, the flowcharts to be described in the following all concern the operations of the control unit 12.

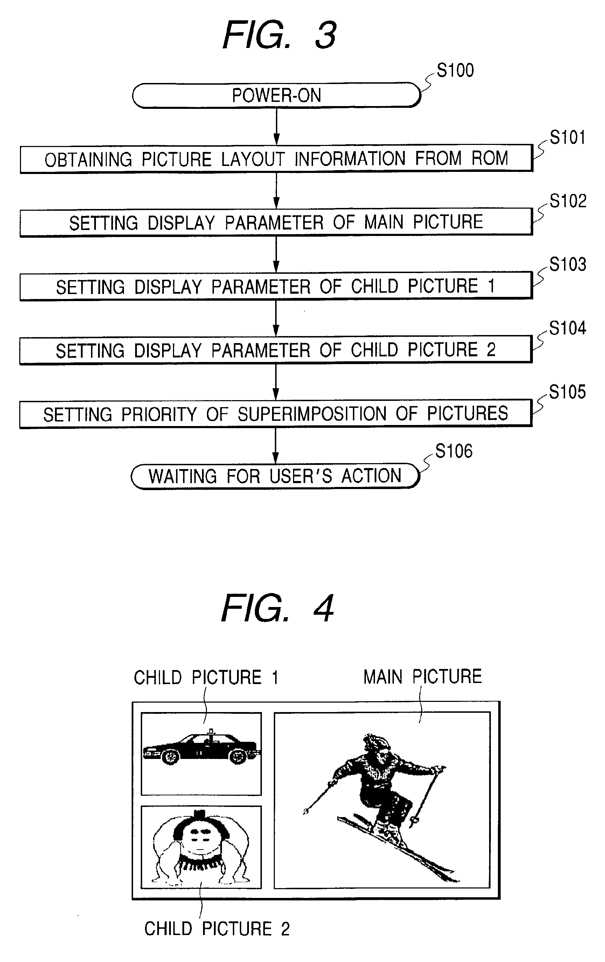

Fig. 3 is a flowchart showing the initialization operation of the system executed at the time of making a power supply. When the control unit 12 detects turn-on of the power supply at Step S100, the control unit 12 obtains picture layout information from the ROM 13 (Step S101). Hereupon, the picture layout information is the information for designating a layout in a picture screen of a main picture, a child picture and the like. In the present embodiment, as shown in Fig. 4, the picture layout is set to display one main picture and two child pictures simultaneously. The layout is used by a user to check a program on a different channel in one of the child pictures or to check a stored recorded program in the other child picture while the user is viewing and listening a favorite program in the main picture. Hereupon, the stored recorded program means program data input from a recording and reproducing apparatus (not shown) which employs a digital video player, a hard disk device or the like. The stored recorded program is input into the demultiplexer 4-2 or 4-3 in Figs. 1A and 1B, and is processed in conformity with each processing system.

Incidentally, the number of display pictures is three to four video input sources. The surplus one video input source may be displayed according to its video category and the display priority of each picture. Hereupon, the video category indicates classifications of, for example, the live video data of a television broadcast received at real time, storage video data input from a recording and reproducing apparatus, and the like. Moreover, the present embodiment has a configuration corresponding to a case where there are two input sources of live video data and two input sources of storage video data. The live video data are input into video input ports 0, 1 (indicated by (0), (1) in Fig. 1A), and the storage video data are input into video input ports 2, 3 (indicated by (2), (3) in Fig. 1B), for example.

Next, the control unit 12 performs the setting of display position parameters to any one of the enlargement and reduction units 6-1 to 6-4 corresponding to a video input port processing system to be assigned to the main picture on the basis of the picture layout information obtained from the ROM 13 (Step S102). Similarly, the control unit 12 performs the setting of display position parameters to any one of the enlargement and reduction units 6-1 to 6-4 corresponding to a video input port processing system to be assigned to a child picture 1 on the basis of the picture layout information obtained from the ROM 13 (Step S103). Furthermore similarly, the control unit 12 performs the setting of display position parameters to any one of the enlargement and reduction units 6-1 to 6-4 corresponding to a video input port processing system to be assigned to a child picture 2 on the basis of the picture layout information obtained from the ROM 13 (Step S104).

For example, as an initial state, the display positions of video images from the video input ports 0-3 are assigned to each picture as follows.

At the display position of the child picture 1: the video images from the video input port 0 and the video input port 1 are displayed with being superimposed on each other.

At the display position of the child picture 2: a video image from the video input port 2 is displayed.

At the display position of the main picture: a video image from the video input port 3 is displayed.

Incidentally, other combinations of the input numbers of the live video data and the storage vide data can also be considered within the ability of the synthesization unit 9 of the present embodiment, that can attain processing the four independent processing systems at the same time.

Incidentally, if the video images from the video input port 0 and the video input port 1 are displayed at the display position of the child picture 1 with being superimposed on each other as described above, the control unit 12 performs the setting of the display priority of each video input port to the synthesization unit 6. That is, the present embodiment gives the video input port 0 the highest priority, and determines the display priority of each video input port to the child picture 1 as follows (Step S105).

Video Input Port 0 for Child Picture 1 > Video Input Port 1 for Child Picture 1 > Video Input Port 2 for Child Picture 2 = Video Input Port 3 for Main Picture.

As described above, in each picture 1-3, video data input from each video input port 0-4 are displayed in conformity with their kinds (or video categories) and the display priorities of the video input ports. After the aforesaid processing at each step, the control unit 12 enters into its waiting state to wait for a user's action with the remote controller 16, and thereby the initialization is completed with the multi-picture display state shown in Fig. 4 (Step S106).

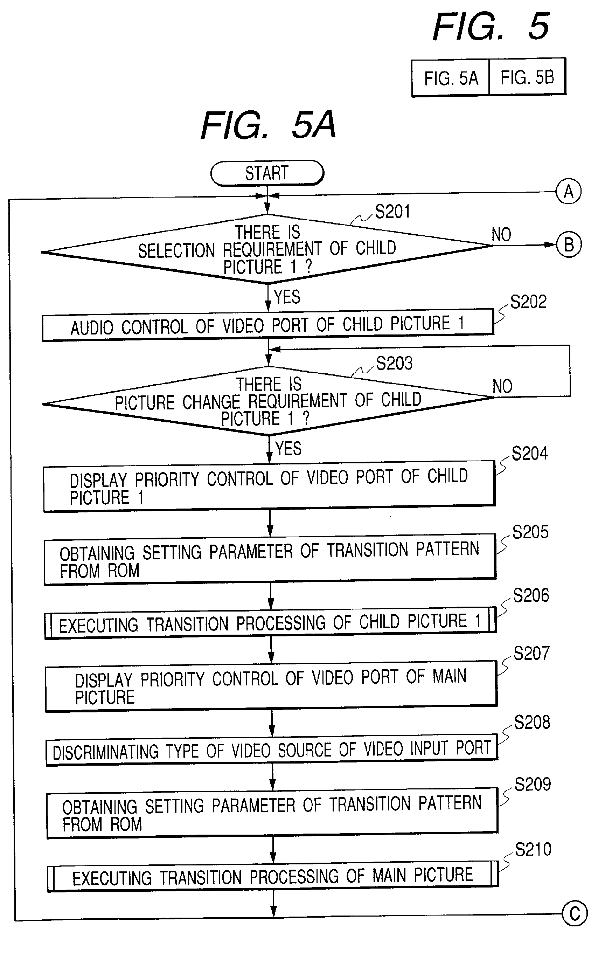

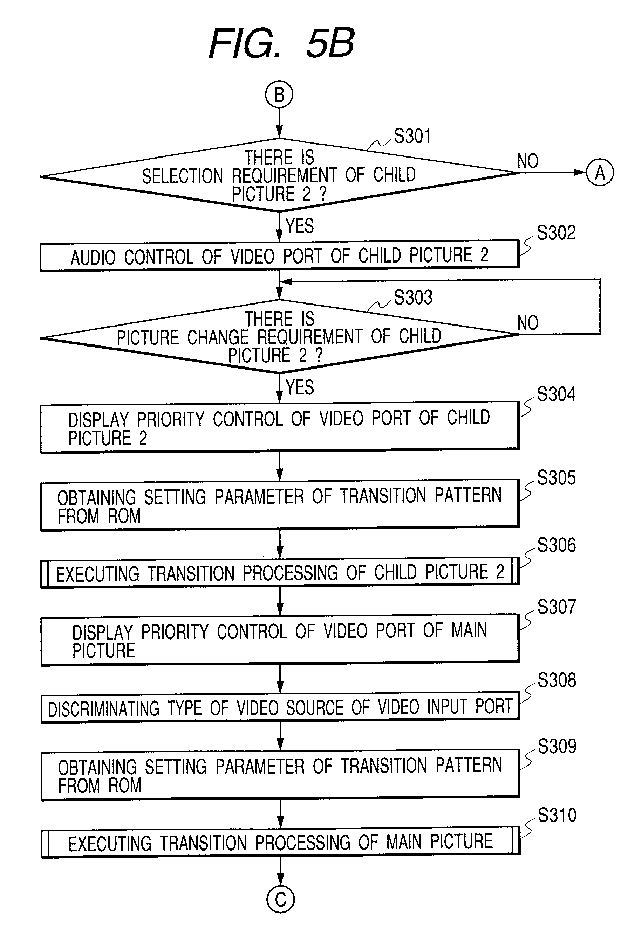

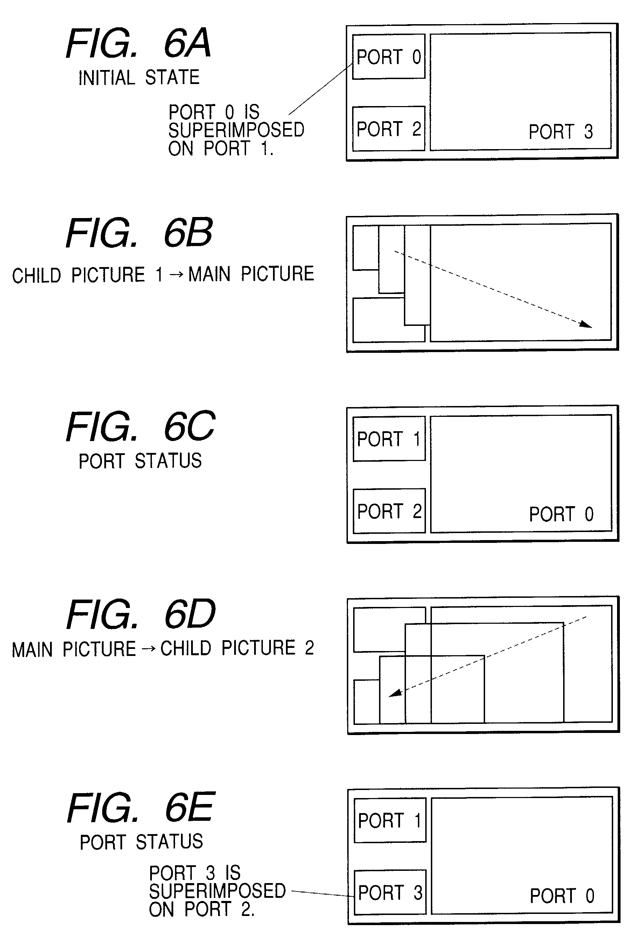

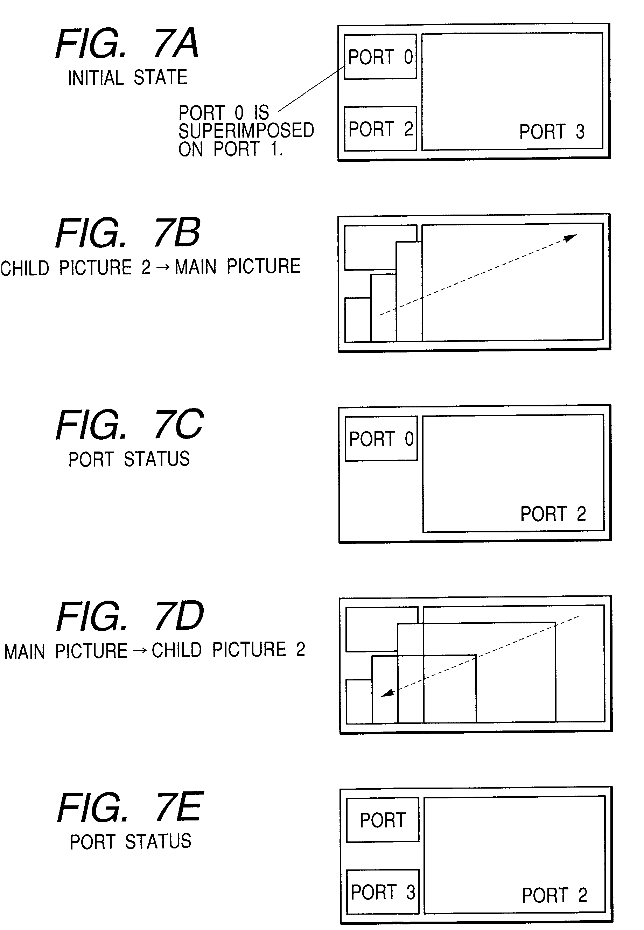

Now, if one of the child pictures is selected in the multi-picture layout as described above and the selected child picture is instantaneously changed to the main picture, a user is hard to know which child picture has changed. To solve this problem, a picture change method for multi-pictures of the present invention is described in detail with reference to Figs. 5A, 5B, 6A to 6E and 7A to 7E. The picture change method utilizes the transition effect of the transition display from the video image of a child picture to the main picture, thereby making it easy for a user to visually know which child picture has changed. Figs. 5A and 5B are flowcharts showing the flow of changing operations between the childe pictures and the main picture. Figs. 6A to 6E and 7A to 7E are image diagrams showing the flow of the changing operations.

At first, the control unit 12 waits a user's selection action of either of the child picture 1 and the child picture 2 from the remote controller 16 (Step S201 and Step S301). This state corresponds to the state shown in Fig. 6A in Figs. 6A to 6E. In the following, descriptions are provided on the assumption that the user performs the selection requirement of picture changing to the child picture 1.

At Step S201, when the control unit 12 judges that the control unit 12 accepts a selection requirement of picture changing of the child picture 1 (Step S201/Yes), the control unit 12 performs the control of changing the output from the audio data in the data input from the video input port 3 to the audio data in the data input from the video input port 0 (Step S202). Next, when the control unit 12 accepts a picture change operation of the child picture 1 (Step S203/Yes), as shown in Fig. 6B, the control unit 12 sets the display priority of the video input ports to the child picture 1 if the control unit 12 makes the child picture 1 undergo a transition to the main picture as shown in Fig. 6B (Step S204). The reason of the setting of the display priority is that the control unit 12 should make the child picture 1 undergo the transition on the screen configured to be multi-pictures. The display priority of the child picture 1 is set as follows.

Video Input Port 0 for Child Picture 1 > Video Input Port 1 for Child Picture 1 > Video Input Port 2 for Child Picture 2 = Video Input Port 3 for Main Picture.

Next, the control unit 12 obtains setting parameters of a transition pattern from the ROM 13 (Step S205), and the control unit 12 executes the transition processing of the child picture 1 on the basis of the obtained setting parameters (Step S206). The transition processing will be described in detail later.

When the aforesaid transition processing is completed, the video image of the child picture 1 from the video input port 0 is displayed at the display position of the main picture, and thus the screen is in a state in which video images from two input sources are superimposed on each other in the main picture as shown in Fig. 6C. Moreover, because the video image from the video input port 0, which is set to have the highest display priority in the child picture 1, is moved, the video from the video input port 1 is displayed at the display position of the child picture 1.

Next, the control unit 12 sets the display priority of the main picture to perform the transition of the video image from the video input port 3 assigned to the main picture. In the present embodiment, the display priority is set as follows at this step to obtain the transition effect that makes the video image from the video input port 3 appear as if it is pulled out from the back side of the video image from the video input port 0 as shown in Fig. 6D (Step S207).

Video Input Port 0 for Main Picture (Front Side) > Video Input Port 3 for Main Picture (Back Side) > Video Input Port 1 for Child Picture 1 = Video Input Port 2 for Child Picture 2.

Next, the control unit 12 discriminates the input source of the video image from the video input port 3 displayed in the main picture (Step S208). The method of the discrimination is as follows. The control unit 12 refers to the relations between video input ports and video input sources, which relations have preliminarily been set to discriminate the video input port assigned to the main picture, and thereby the control unit 12 can discriminate the video input source to be displayed in the main picture. Moreover, all of the video data which make an entry into the child picture 1 and all of the video data which make entry into the child picture 2 can undergo transitions to the main picture. Then, the control unit 12 can extract the video input port to be assigned to the main picture by managing dynamically the state change caused by the undergoing of the transitions.

Moreover, in the present embodiment, it is the video data from the video input port 3 that was displayed into the main picture before the video data from the video input port 0 underwent the transition into the main picture to be displayed therein. The video data from the video input port 3 are storage video data. Accordingly, the control unit 12 makes the video data from the video input port 3 undergo a transition to the display position of the child picture 2, where storage video data are displayed.

Incidentally, besides the aforesaid embodiment, for example, the method of setting the display priorities may be one of pulling out the video data being transition objects from the top side of the main picture. Moreover, the method may include the step of executing a transition from a child picture to the main picture after the transition of the main picture.

And then, the control unit 12 obtains setting parameters of a transition pattern from the ROM 13 (Step S209), and executes the transition processing from the main picture on the basis of the setting parameters (Step S210). After the completion of the transition processing, the screen enters in the state shown in Fig. 6E. And the control unit 12 is in the state of waiting for a selection requirement of a child picture at Step S201.

Moreover, if the child picture 2 is selected similarly to the selection of the child picture 1, the processing system from Step S301 to Step S311 is executed. In the following, the case where the child picture 2 is selected is described in detail with reference with Figs. 5A, 5B and 7A to 7E. Figs. 7A to 7E are image diagrams showing a flow of the transition processing operation in the case where the child picture 2 is selected.

At first, when the control unit 12 judges that the control unit 12 accepts a picture selection requirement of the child picture 2 (Step S301/Yes), the control unit 12 executes the control of changing the output to the audio of the program data provided from the video input port 2 assigned to the child picture 2 (Step S302). At this time, the screen is in the state shown in Fig. 7A. Next, when the control unit 12 accepts a picture change operation to the main picture (Step S303/Yes), the control unit 12 shifts to the processing at Step S304.

Next, as shown in Fig. 7B, the control unit 12 sets the display priority of the child picture 2 to make the child picture 2 undergo a transition to the display position of the main picture (Step S301). The display priority of the child picture 2 at this step is set as follows.

Video Input Port 2 for Child Picture 2 > Video Input Port 0 for Child Picture 1 > Video Input Port 1 for Child Picture 1 > Video Input Port 3 for Main Picture.

Next, the control unit 12 obtains setting parameters of a transition from the ROM 13 (Step S305), and the control unit 12 executes the transition processing of the child picture 2 on the basis of the obtained setting parameters (Step S306). When the transition processing is completed, the video from the video input port 2 is displayed at the display position of the main picture, and the screen is in a state in which video images from two input sources are superimposed on each other in the main picture as shown in Fig. 7C. Moreover, because the video image from the video input port 2 is undergone the transition to the main picture, nothing is displayed at the display position of the child picture 2 at this point of time.

Next, the control unit 12 sets the display priority of the main picture to perform a transition of the video from the video image input port 3, which video image is displayed at the display position of the main picture before the video image from the video input port 2 is made to undergo the transition (Step S307). In the present embodiment, the display priority is set as follows at this step to obtain the transition effect that makes the video image from the video input port 3 appears as if it is pulled out from the back side of the video from the video input port 2 as shown in Fig 7D.

Video Input Port 2 for Main Picture (Front Side) > Video Input Port 3 for Main Picture (Back Side) > Video Input Port 0 for Child Picture 1 > Video Input Port 1 for Child Picture 1.

Next, the control unit 12 discriminates the video input source from the video input port that is displayed in the main picture (Step S308). In the present embodiment, the video image of the video input port 3 is displayed in the main picture before the transition of the video input port 2, and the video image of the video input port 3 is storage video data. Consequently, the video image from the video input port 3 is made to undergo a transition to the display position of the child picture 2, where storage video data are displayed.

Next, the control unit 12 obtains setting parameters of a transition pattern from the ROM 13 (Step S309), and executes the transition processing from the main picture on the basis of the setting parameters (Step S310). After the completion of the transition processing, the screen enters in the state shown in Fig. 7E. And the control unit 12 is in the state of waiting for a selection requirement of a child picture at Step S301.

The aforesaid transition processing is hereupon described in detail. At first, the transition means the operation of transferring a picture of a rectangular video display area while repeating drawing the picture from original coordinates to the coordinates to which the picture is shifted. It is desirable to be capable of designating arbitrary coordinates as the original coordinates and the shifted coordinates of the transition. Because the video display area in the original coordinates and the shifted video display area are different from each other as described above, it is premised to use an LSI having a scaling function such as that of the enlargement and reduction unit 6-1 shown in Figs. 1A and 1B. Incidentally, although various techniques are used for the scaling LSI, the techniques are not described in detail here because they are not the subject matter of the present invention.

Moreover, if the number of steps (or the number of the drawings of pictures) of the execution of a transition is made to be arbitrarily set, the merit of the improvement of smoothness at the time of the transition and the merit of capability of the adjustment of the execution time of the transition are attained. Owing to the aforesaid merit of the capability of the appointment of arbitrary coordinates as the original coordinates and the shifted coordinates, the merit of the capability of the arbitrary setting of rectangular areas in the original coordinates and the shifted coordinates, and the merit of capability of the setting of the number of steps, a transition processing method having a high degree of freedom can be attained here.

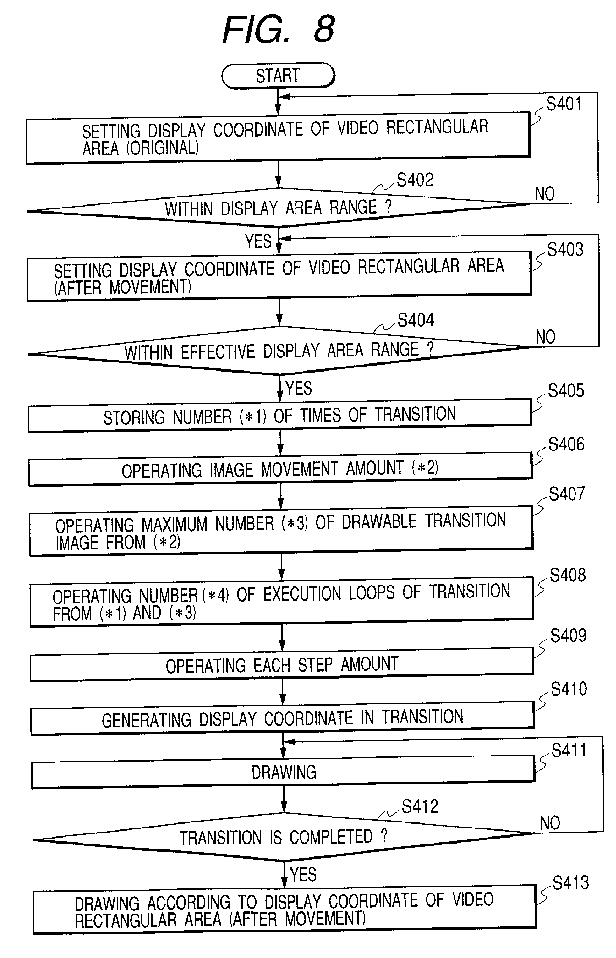

In the following, the transition processing according to an embodiment of the present invention is described in detail with reference to Fig. 8. Fig. 8 is a flowchart showing the flow of the transition processing operation of the present embodiment. Moreover, in the present embodiment, descriptions are given on the supposition that the processing of a rectangular video display area is performed on two pixel basis in the horizontal direction and on one line basis in the vertical direction.

At first, the control unit 12 sets original display coordinates prior to the execution of transition processing (Step S401). Next, the control unit 12 judges whether the video display area of the original display coordinates is within an effective display range or not (Step S402). In the judgment, if the control unit 12 judges the video display area to be an effective display area (Step S402/Yes), the control unit 12 shifts the processing thereof to Step S403. On the contrary, if the control unit 12 judge the video display area not to be an effective display area (Step S402/No), the control unit 12 waits for setting of a video display area which is an effective display area.

Next, the control unit 12 sets the coordinates of the video display area, to be shifted in transition processing (Step S403), and judges whether the transition display area of the shifted coordinates is an effective display area or not (Step S404). If the control unit 12 judges the video display area to be an effective display area in the judgment at Step S404 (Step S404/Yes), the control unit 12 shifts the processing thereof to Step S405. On the contrary, if the control unit 12 judge the video display area not to be an effective display area (Step S404/No), the control unit 12 waits for setting of a video display area which is an effective display area.

Next, the control unit 12 sets the number of times of requests for the execution of a transition. The number of times of requests in this case is the number of times of the drawings of images to be requested during the execution of transition processing. Next, the control unit 12 obtains the absolute value of the transfer amount of each of the vertexes of the rectangular video areas between before and after the execution of transition processing, on the basis of the coordinates of each of the vertexes (Step S406).

Next, the control unit 12 obtains the maximum number of times of the drawings of images in transition processing (Step S407). The maximum number of times of the drawings of images is obtained from the absolute values of the transfer amounts obtained with regard to each of the vertexes. Because the present embodiment processes transfer on the two pixel basis in the horizontal direction as described above, the maximum value of horizontal transfer amounts is always an even number. Moreover, because the present embodiment processes transfer on the line basis in the vertical direction, the maximum value of vertical transfer amounts can be an even number and an odd number.

However, the numbers of steps of execution of a transition are restricted on the two pixel basis in the horizontal direction. Accordingly, for example, if the maximum value of the transfer amounts in the vertical direction is larger than the maximum value of the transfer amounts in the horizontal direction and the maximum value of the transfer amounts in the vertical direction is an odd number, the maximum value of the transfer amounts in the vertical direction is made to be an even number by means of round processing such as carrying. After the execution of such a procedure, the maximum value of the transfer amounts in the horizontal direction and the maximum value of the transfer amounts in the vertical direction are compared, and thereby the maximum number of times of the drawings of images in the transition processing is obtained.

Next, the control unit 12 obtains the number of loops of the execution of a transition (Step S408). If a result of a comparison of the number of requests set at Step S405 with the maximum number of times of drawings obtained at Step S407 is:

Number of Times of Requests ≥ Maximum Number of Times of Drawings of Images,

the number of loops of the execution of a transition is the aforesaid maximum number of times of drawings. Moreover, if the number of times of requests and the maximum number of times of the drawings of images do not satisfy the aforesaid relationship, the number of loops of the execution of a transition may be the aforesaid number of times of requests.

Next, the control unit 12 obtains the step amounts of display coordinates at four vertexes of a video display area in transition processing (Step S409). The step amounts take a positive value or a negative value according to the direction of the transfer of an image. Step S410 to Step S412 form a transition execution loop. Hereupon, the control unit 12 calculates image drawing coordinates with regard to four vertexes of the video display area in a transition (Step S410). Next, the control unit 12 sets drawing parameters to the enlargement and reduction units 6-1 to 6-4, and draws the image in the transition (Step S411). The transition execution loop is repeatedly executed until the completion of the transition processing (Step S412).

After the execution of the last transition execution loop, the last video display area at the shifted display coordinates is drawn (Step S413), and then the transition processing is completed.

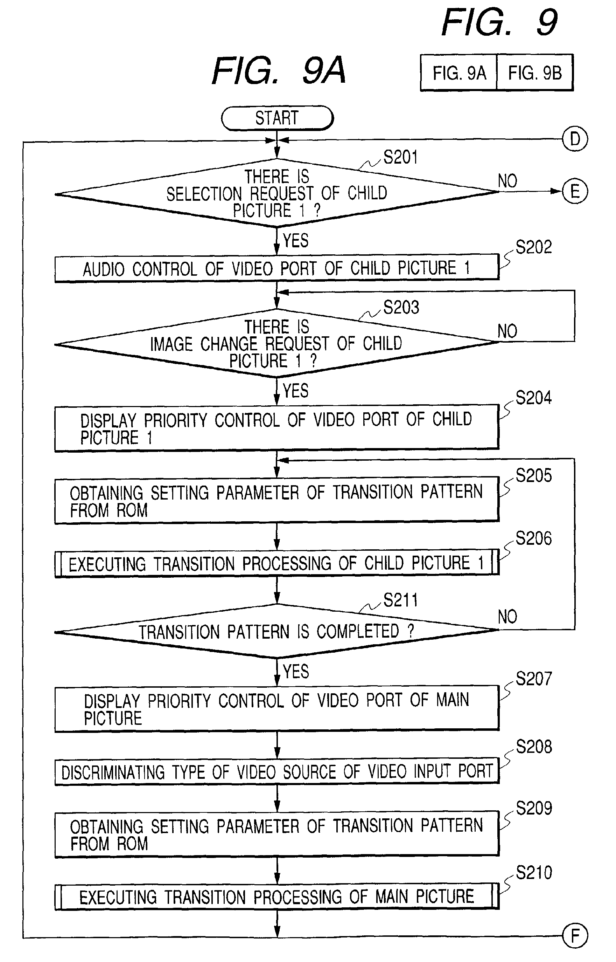

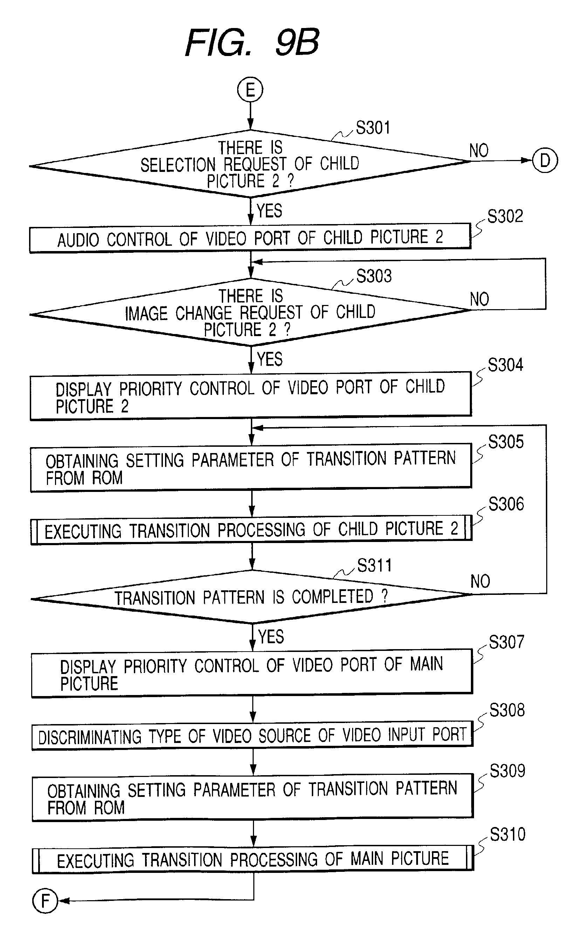

Successively, a second embodiment of the present invention is described in detail. Because the system configuration and the initialization operation of the present embodiment are the same as those of the first embodiment described above, their descriptions are omitted. The difference of the present embodiment from the first embodiment is to execute the transition processing a plurality of times continuously. The transition processing operation repeated a plurality of times continuously is shown in the flowchart of Figs. 9A and 9B.

The flowchart of Figs. 9A and 9B are composed of Steps S211 and S311 added to the flowchart of Figs. 5A and 5B. The other operations of the flowchart of Figs. 9A and 9B are the same as those of the flowchart of Figs. 5A and 5B. Steps S211 and S311 constitute execution loops over arbitrary numbers of times. Thereby, the transition processing repeated a plurality of times continuously is enabled.

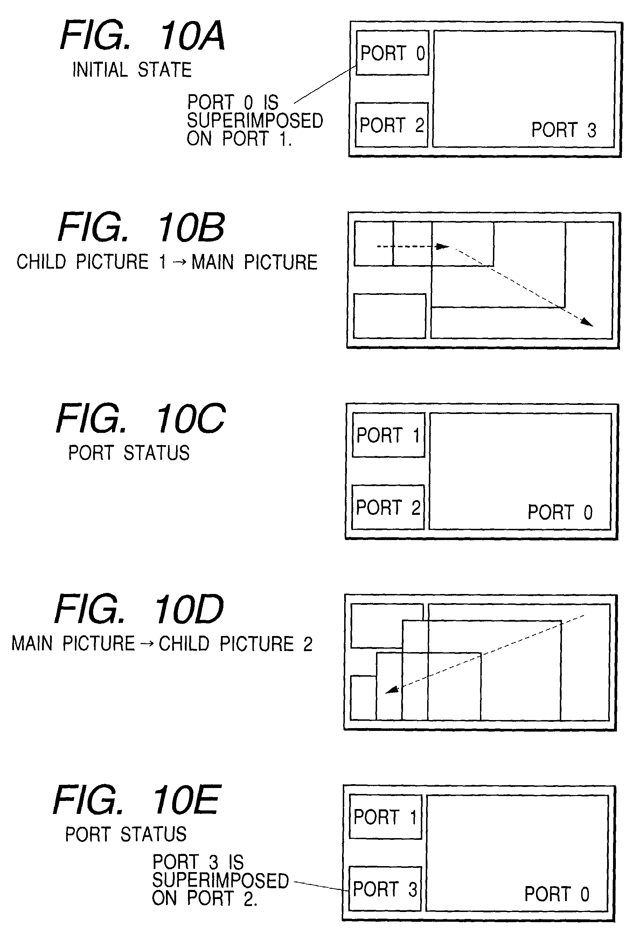

Successively, a third embodiment of the present invention is described in detail. The initial state of the present embodiment is like one shown in Fig. 10A. As shown in Fig. 10B, the transition in the present embodiment executes a transition in which the video image in the child picture 1 is horizontally transferred up to the inside of the display area of the main picture and then the video image of the child picture 1 is enlarged from the point where the video image of the child picture 1 enters into the inside of the display area of the main picture until the video image reaches the whole display area of the main picture. The configuration of the present embodiment is designed with the intention of bringing about the effect of surely informing a user of the change of the video image of the child picture 1 to the main picture. Incidentally, if a little time is provided after the child picture 1 once enters into the display area of the main picture, the changing of the picture is further stressed.

After that, in the steps shown in Fig. 10C and 10D, like the steps shown in Figs. 6A to 6E in the first embodiment, the video image undergoes the transition from the back side of the main picture, and the transition is completed as shown in Fig. 10E. Moreover, the continuous processing described with regard to the second embodiment may be performed in the present embodiment, too. By the combination of the transition processing like that, it becomes possible to achieve the effects of changing various video images with a high degree of freedom.

Moreover, in the present invention, a video image to be displayed in each picture may be a still image or a dynamic image. Furthermore, the video image may be configured to be a multi-picture display in which a still image and a dynamic image are combined.

In the scope of the present invention is also included the implementation of supplying program codes of software for realizing the functions of the aforesaid embodiments to an apparatus connected with various devices or a computer in the system composed of the various devices for making the various devices operate to realize the functions of the embodiments, and of operating the various devices in conformity with the program stored in the computer (or CPU or MPU) of the system or the apparatus.

Moreover, in this case, the program codes of the software themselves realize the functions of the aforesaid embodiments. Then, the program codes themselves and means for providing the program codes to the computer such as a recording medium storing such program codes also constitute the present invention. As the recording medium for storing such program codes, for example, a flexible disk, a hard disk, an optical disk, a magneto-optical disk, a CD-ROM, a magnetic tape, a nonvolatile storage card, a ROM and the like can be used.

Moreover, in the case where the functions of the aforesaid embodiments are realized by the cooperation of program codes supplied to a computer with the operating system (OS), other application software, or the like, all operating in the computer, as well as in the case where the functions of the aforesaid embodiments are realized by the execution of the computer of the supplied program codes, it is needless to say that such program codes are included in the present invention as one of the embodiment thereof.

Furthermore, it is also needless to say that the present invention also includes the following case. In the case, after supplied program codes have been stored in a memory provided in a feature expansion board of a computer or in a feature expansion unit connected with the computer, a CPU or the like provided in the feature expansion board or the feature expansion unit executes a part of or the whole of actual processing in conformity with the instructions of the program codes, and thereby the functions of the aforesaid embodiments are realized by the processing of the CPU or the like.

As it is apparent form the descriptions mentioned above, the present invention enables the transition display that can ensure the sufficient visibility of picture changes caused by a user's picture change operation. Consequently, it is possible for the user to easily discriminate that the operation and the execution of the picture change are executed. Moreover, a transition period bringing about a fixed transition effect is provided at the time of a picture change. Consequently, it is possible for the user to visually ascertain which picture has been changed especially in a change of picture display positions at the time of multi-picture display.

Moreover, according to the present invention, at the time of a picture change from a child picture to a main picture, not only the video image of the child picture which is transferred from the child picture, is overwritten in the main picture, but also the video image of the main picture undergoes a transition thereof to be displayed at a display position in a picture corresponding to the video category of the input source of the video of the main picture, and thereby the assortment of the input source of the video viewed in the main picture can be discriminated.

Moreover, according to the present invention, it can be avoided that the video image viewed is lost during a transition, by the performance of the display of the video at the highest priority at a display position in the video category thereof. Consequently, it can be realized that a user can change pictures in an intuitive manner at the time of multi-picture display, and also the easiness of user's visibility of the multi-pictures at that time can be improved.

Many widely different embodiments of the present invention may be constructed without departing from the spirit and scope of the present invention. It should be understood that the present invention is not limited to the specific embodiments described in the specification, except as defined in the appended claims.

## Claims

1. A display control apparatus for controlling display means capable of displaying video images respectively in a plurality of windows on the same screen, comprising:
instruction means for instructing any one of said plural windows while the video images being displayed in said plural windows respectively; and
display control means for controlling said display means to display a first video image displayed in a first window instructed by said instruction means, in a second window by changing the first video image with a second video image displayed in the second window,
wherein said display control means controls said display means to display a process of a gradual transition of the first video image from the first window to the second window.

2. A display control apparatus according to claim 1, wherein a minimum unit of processing of each of resolutions in video display areas of said plurality of windows is two pixels in a horizontal direction and one line in a vertical direction.

3. A display control apparatus according to claim 1, wherein said plurality of windows are displayed respectively in predetermined positions in said display means without overlapping with each other.

4. A display control device according to claim 3, wherein said predetermined positions are determined according to the kind of video image.

5. A display control apparatus according to claim 1, wherein said display control means controls said display means to display a process of a gradual transition of the second video image from the second window to a third window when display of the second video image is changed from the second window to the third window.

6. A display control apparatus according to claim 5, wherein said display control means controls a display position of the third window according to a priority between the second video image and a video image displayed in the third window before a transition of the second video image.

7. A display control apparatus according to claim 1, wherein the transition expresses a change of a size and/or a display position of the window.

8. A display control apparatus according to claim 1, wherein said plurality of windows include a main picture and sub-pictures smaller than the main picture severally.

9. A display control apparatus according to claim 8, wherein said display control means disposes the sub-pictures and the main picture not to overlap with each other after changing video images in the sub-pictures and the main picture.

10. A display control apparatus according to claim 8, wherein said display control means replaces video images of a designated sub-picture and the main picture while transferring gradually a position of the designated sub-picture over a predetermined period.

11. A display control apparatus according to claim 8, wherein said display control means replaces video images in a designated sub-picture and the main picture while changing gradually a size of the designated sub-picture over a predetermined period.

12. A picture display method for displaying a plurality of images in a main picture and at least one sub-picture, comprising:
an input step of selecting at least one sub-picture; and
a display step of performing transition display when display positions of the sub-picture selected in said input step and the main picture are replaced.

13. A picture display method according to claim 12, wherein a minimum unit of processing of each of resolutions in video display areas of the sub-picture and the main picture is two pixels in a horizontal direction and one line in a vertical direction.

14. A picture display method according to claim 12, wherein a display position of the sub-picture is determined according to a kind of a display image.

15. A picture display method according to claim 12, wherein at least one of the sub-picture and the main picture is a dynamic image or a still image.

16. A picture display method according to claim 12, wherein an audio signal is also changed according to the transition display in said display step when the display positions of the sub-picture and the main picture are changed.

17. A picture display method according to claim 12, wherein the sub-picture and the main picture are display areas different from each other.

18. A picture display method according to claim 12, wherein said display step includes a step of arranging display areas of the sub-picture and the main picture not so as to overlap with each other after changing the sub-picture and the main picture.

19. A picture display method according to claim 12, wherein said display step includes a step of replacing the selected sub-picture and the main picture while gradually changing a position and/or a size of the selected sub-picture over a predetermined period.

20. A computer program for executing said picture display method according to any one of claims 12 to 20.

21. A recording medium storing a computer program for executing said picture display method according to any one of claims 12 to 20.
